# EUROPEAN PATENT SPECIFICATION

(11) **EP 4 376 629 B1**
(45) Date of publication and mention of the grant of the patent: **18.03.2026**
(21) Application number: 22747455.8
(22) Date of filing: 29.07.2022
(51) Int. Cl.: A23C 20/02

(54) **METHOD OF MAKING A A VEGAN CREAM-CHEESE-LIKE SPREAD**
VERFAHREN ZUR HERSTELLUNG EINES VEGANEN CREMEKÄSEÄHNLICHEN AUFSTRICHES
PROCÉDÉ DE FABRICATION D'UNE PÂTE À TARTINER VÉGÉTALIENNE DE TYPE FROMAGE À LA CRÈME

(30) Priority: 30.07.2021 GB 202111014
(43) Date of publication of application: 05.06.2024
(60) Divisional application: 25166043.7
(73) Proprietor: Intercontinental Great Brands LLC, East Hanover, NJ 07936 (US)
(72) Inventor: LEBRUN, Ludivine, 29683 Bad Fallingbostel (DE); MANDATI, Stephanie, 82008 Unterhaching (DE); LEONARDO, Helen, 82008 Unterhaching (DE); PHUONG DANG, Bich, 82008 Unterhaching (DE); BRIFFAZ, Aurelien, 82008 Unterhaching (DE); KUENZEL, Daniel, 82008 Unterhaching (DE); SCHAEFER, Johannes, 82008 Unterhaching (DE); TORO, Jose, 82008 Unterhaching (DE)
(74) Representative: Boult Wade Tennant LLP
(86) International application number: PCT/IB2022/057070
(87) International publication number: WO 2023/007458

(56) References cited:
- EP-A2- 3 944 772
- DE-U1- 202011 002 097
- DE-U1- 202015 105 079
- DATABASE GNPD [online] MINTEL; 20 September 2021 (2021-09-20), ANONYMOUS: "Avocado and Walnut Cream Cheese", XP055908816, retrieved from https://www.gnpd.com/sinatra/recordpage/9018198/ Database accession no. 9018198
- DATABASE GNPD [online] MINTEL; 15 October 2020 (2020-10-15), ANONYMOUS: "Original Dairy-Free Creamy Cheese", XP055908827, retrieved from https://www.gnpd.com/sinatra/recordpage/8188211/ Database accession no. 8188211
- DATABASE GNPD [online] MINTEL; 4 June 2021 (2021-06-04), ANONYMOUS: "Original Just Like Cream Cheese", XP055908819, retrieved from https://www.gnpd.com/sinatra/recordpage/8758999/ Database accession no. 8758999
- DATABASE GNPD [online] MINTEL; 20 September 2021 (2021-09-20), ANONYMOUS: "Avocado and Walnut Cream Cheese", XP055908816, retrieved from https://www.gnpd.com/sinatra/recordpage/9018198/ Database accession no. 9018198
- DATABASE GNPD [online] MINTEL; 4 June 2021 (2021-06-04), ANONYMOUS: "Original Just Like Cream Cheese", XP055908819, retrieved from https://www.gnpd.com/sinatra/recordpage/8758999/ Database accession no. 8758999
- DATABASE GNPD [online] MINTEL; 15 October 2020 (2020-10-15), ANONYMOUS: "Original Dairy-Free Creamy Cheese", XP055908827, retrieved from https://www.gnpd.com/sinatra/recordpage/8188211/ Database accession no. 8188211
- "Innovative Food Processing Technologies", 1 January 2021 (2021-01-01), pages 244 - 273, XP055909430, ISBN: 978-0-12-815782-4, Retrieved from the Internet <URL:http://dx.doi.org/10.1016/B978-0-08-100596-5.23021-7> DOI: 10.1016/B978-0-08-100596-5.23021-7
- ASAITHAMBI NIVEDITHA ET AL: "Hydrodynamic cavitation and its application in food and beverage industry: A review", vol. 42, no. 5, 17 June 2019 (2019-06-17), US, XP055910182, ISSN: 0145-8876, Retrieved from the Internet <URL:https://onlinelibrary.wiley.com/doi/full-xml/10.1111/jfpe.13144> DOI: 10.1111/jfpe.13144
- ANONYMOUS: "Cavitation Technology for Yoghurt Processing", 1 May 2015 (2015-05-01), XP055909858, Retrieved from the Internet <URL:https://www.spxflow.com/assets/pdf/apv-cavitation-technology-yoghurt-14017-01-05-2015-gb.pdf> [retrieved on 20220406]

## Description

This disclosure relates to a method for the provision of a vegan cream-cheese-like spread. In particular, the disclosure provides a method for obtaining an almond-based cream-cheese-like spread with a novel microstructure which can be obtained without relying on a conventional hot homogenisation process.

Cream cheese is a soft, usually mild-tasting fresh cheese made from milk and cream. In order to make cream cheese, conventionally lactic acid bacteria are added to pasteurized and homogenized milk/cream. During fermentation the pH of the milk decreases (it becomes more acidic) which causes milk proteins to become neutrally charged. This stops the proteins from stabilising fat droplets and causes the liquid to coagulate. This gives the increased texture associated with cream cheese.

There is a desire to provide an alternative to cream cheese which does not require the use of dairy ingredients. Such a vegan product would need to avoid both the use of the dairy starting ingredient and the use of fermentation cultures having an animal origin. In practice, avoiding the use of dairy means that an alternative source of protein and an alternative source of fat needs to be provided.

It is known that a vegan cream-cheese-like spread can be produced using ground nut and seed products, especially ground almonds. These ingredients require some treatment in order to develop the intended texture required for the final product. This treatment needs to fully homogenise the protein and fat present in the composition, in order to form a stable distribution of these components throughout the product.

EP3352580 (and the related DE202015105079) discloses a vegan cream-cheese-like product obtained by homogenising a pasty mass of comminuted nuts and/or seeds. The method involves a hot homogenisation process which is immediately preceded by a heat-holding step between 75°C and 95°C to agglomerate the proteins. The process is preferably carried out on an almond butter, i.e. finely ground full-fat almonds. In this process the fermentation is performed after the homogenisation step.

EP3620059 is a very similar process, although it is less focused on the provision of a cream-cheese-like product. This uses exactly the same process steps as EP3352580, but uses a de-oiled almond flour as the starting component. As would be expected, this has no material effect on the processing, but does permit greater flexibility in providing low fat food products.

Similarly, EP3745883 discloses a vegan cream-cheese-like product. This is formed using a partially de-oiled flour made from nuts and/or seeds, and then supplemented with fat, such as oil, to overcome alleged pumpability issues.

EP3944772 relates to a range of cream analogues, composed of plant ingredients and having functional and organoleptic properties close to those of dairy products.

DE202011002097 relates to a purely plant-based cream cheese-like spread which is composed of nuts, drinking water, sea salt and a ripening culture.

Mintel entries are available showing that Dairy-free Crema cheese-like products were known in 2020 and 2021. These include "Avocado and Walnut Cream Cheese" (9018198), "Original Just like Cream Cheese" (8758999) and "Original Dairy-free Creamy Cheese" (8188211). It is considered that these products do not demonstrate the unusual structure achieved by the method described herein.

Accordingly, it is desirable to provide an alternative vegan cream-cheese-like spread, especially one which can be produced with a lower energy cost and/or to tackle at least some of the problems associated with the prior art or, at least, to provide a commercially viable alternative thereto.

In a first aspect there is provided a method for the manufacture of a vegan cream-cheese-like spread as defined in the claims appended hereto.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

There is provided a method for the manufacture of a cream-cheese-like spread. A vegan cream-cheese-like spread is a product meeting the requirements to be vegan compliant (i.e. no animal-sourced ingredients) which is cream-cheese-like. That is, it must be a soft spreadable composition resembling cream cheese, which desirably has at least some of the same acidic flavour notes. It should be noted that the term would encompass similar spreads, as well as cream cheese-like products having additional food additives (such as herb and seasoning additives, or flavourings such as chocolate spread).

The inventors set out to make such a vegan (i.e. plant-based) cream-cheese-like spread with limited number of ingredients that has a similar creamy mouthfeel as standard full-fat cream cheese with a neutral and fresh taste. The inventors first investigated known dairy processing techniques. It is known that when using milk derived ingredients and the state of the art hot high pressure homogenizer, a stable emulsion of casein and fat is created that has great mouthfeel and good melt characteristics.

Therefore, the inventors first looked to employ conventional dairy processing to a non-dairy protein source. EP3620059 employs such conventional dairy processes to a de-oiled almond powder starting ingredient. Therefore the inventors set out to provide an alternative cream-cheese-like spread to that which could be achieved using, in part, the process described in EP3620059.

The inventors first investigated whether a cold homogenisation step would be sufficient to make a product, but the viscosity and mouthfeel were not sufficient.

The inventors were aware of cavitation processing as an alternative to high pressure homogenisation, since it is used in dairy cream cheese production to disrupt whey protein aggregates. However, they found that when they tried to use cavitation the viscosity of the product was unacceptable low, resulting in an overly sloppy product. This did not resemble the desired cream cheese product and gave rise to splashing during filling operations.

The inventors surprisingly found that if they performed an initial cold homogenisation, followed by the cavitation, they could produce a vegan cream-cheese-like spread product having a suitable product viscosity (i.e. when cooled and in the packaging). Without wishing to be bound by theory, it was considered that in the cavitation alone the protein was involved in competing emulsification and de-emulsification processes, whereas the initial cold homogenisation processing partially denatured the proteins before cavitation, changing their performance and improving the final product.

Furthermore, it was found that the hot viscosity of the composition up to the filler was lower than that obtained following hot homogenisation. This means that there can be energy savings in the pumping of the composition. This coupled with the reduced heating requirements and the lower typical energy consumption of a hydrodynamic cavitator compared to a high pressure homogenizer, lead to reduced operational costs.

Surprisingly the inventors found that there were no discernible sensory differences between the product obtained by hot homogenisation, compared to the method of the invention. This was despite there being apparent differences in the microstructure of the product discernible in microscopic analysis. These differences are discussed further below, in relation to the enclosed figures.

The method comprises providing an aqueous precursor composition comprising plant protein. It is generally preferred that the protein is provided as a part of a whole or defatted ingredient. For example, when the plant protein is almond protein, this may be provided as almond powder and hence the composition further comprises naturally occurring almond fat and carbohydrates.

Preferred plant proteins include those from nuts and/or seeds, as well as those from cereal grains and pulses. Examples of nuts include almonds and hazelnuts. Examples of cereal grains include oat, wheat, rice, rye and barley. Examples of pulses include beans, peas and lentils. A combination of almond and oat is most preferred. The nuts and/or seeds may be provided as ground whole ingredients, or in a partially de-oiled form.

The aqueous precursor composition is a suspension comprising at least the plant protein in water. Preferably the aqueous precursor comprises at least 50wt% water, preferably from 70 to 90wt% water. These high levels of water allow the mixture to be pumpable, while also providing a desirable environment for the fermentation step.

Preferably the aqueous precursor composition comprises the plant protein source (such as ground almonds) in an amount of at least 5wt%, preferably at least 10wt%, by weight of the aqueous precursor composition. Suitable amounts may be from 5 to 20wt%, preferably 10 to 15wt%, by weight of the aqueous precursor composition. Preferably the almond protein is provided by the addition of defatted almond powder.

The aqueous precursor composition may further comprise one or more ingredients selected from gums, salt and flavourings. Preferably the aqueous precursor composition is substantially free from further emulsifiers and stabilisers, since this helps to achieve the desired object of having a clean label.

Gums, such as locust bean gum, are especially preferred as it has been found that they stabilise the precursor during the treatment step (especially fermentation). Otherwise it has been found that the precursor composition can undergo a phase separation.

The aqueous precursor can comprise a fat component in addition to any fat provided as part of the source of plant protein. However, as discussed below, this is preferably only added after fermentation.

The method comprises treating the aqueous precursor composition to form a treated composition. The treatment comprises either, or both, of fermentation with vegan cultures and direct acidification with the addition of an acid ingredient, such as lactic or citric acid, or lemon juice. Vegan cultures suitable for the production of dairy-based cream cheeses can also be used here, i.e. lactic acid producing cultures, and these are well known in the art. The extent of fermentation is determined by the desired final pH and flavour notes.

Preferably the method further comprises a step of pasteurising the aqueous precursor composition before the step of fermentation. This ensures that the fermentation step favours the correct products being formed from the intended cultures.

Fermentation is preferred since this has been found to provide a consistent flavour and texture. According to a less preferred embodiment, the flavour and texture can be achieved with a direct acidification step, such as with lactic acid or citric acid. However, the flavour in this embodiment may be discernibly different and the texture may be softer. The amount of added lactic acid and/or citric acid is determined by the desired final pH and flavour notes.

After the treatment step the treated composition may desirably be subjected to cold storage, preferably at temperatures below 10°C. This serves to prevent fermentation and to allow batchwise homogenisation/cavitation processing.

The method comprises subjecting the treated composition to a cold homogenisation step in a homogeniser to form a homogenised composition. Homogenisation processes are well known in the art, especially for dairy processing, and are also discussed at length in EP3620059, the entire contents of which are incorporated by reference. The homogenisation is performed in a homogeniser.

By a cold homogenisation step it is meant that the step is performed at a temperature of up to 60ºC, preferably from 24 to 60ºC, more preferably 30 to 50 ºC, and most preferably about 38ºC. As is conventional, these temperatures are the inlet temperatures, since it should be appreciated that homogenisation can cause an increase in temperature between the inlet and outlet of the homogeniser.

Since a homogenisation process involves pumping the composition, it will be performed under pressure. The pressure during the cold homogenisation will be in the range of 20 to 600 Bar. Preferably the cold homogenisation step is performed at a pressure of at least 200 Bar, such as 250 to 500 Bar. Preferably the cold homogenisation step is a two-stage homogenisation process, as is known in the art.

It is desirable that before the cold homogenisation step the treated composition comprises at least 10wt% fat. This may be provided entirely with fat present in the aqueous precursor composition. However, preferably the method further comprises a step of adding a liquid fat to the treated composition before the step of cold homogenisation, preferably in an amount of from 10 to 30wt%, by weight of the treated composition. A preferred fat is coconut fat. The addition of the fat helps to provide the desired texture. While the fat can be included in the aqueous precursor composition, it is desirable to minimise the volume which needs to be subjected to fermentation. Preferably the final product contains fat in an amount of 10 to 30wt%, preferably 15-25wt%.

Furthermore, the inventors surprisingly discovered that it was undesirable to have added the fat before homogenisation since the fermented composition would be unstable against fat crystallisation. That is, added fat would be heated during fermentation, but lead to crystallisation when cooled, especially a cold-storage step (i.e. below 10°C) which would be desired to stop the fermentation and permit use of a batch on a following day. The melting point of coconut oil is 24°C. Thus, the emulsion would be destabilized when the product was cooled down to below 10°C, giving a large variability in finished product texture.

The method then comprises subjecting the homogenised composition to a cavitation treatment in a cavitator to form a vegan cream-cheese-like spread. The cavitation is performed in a cavitator. Cavitators are well known in the art and, as noted above, are used in the disaggregation of whey proteins. Cavitation is a phenomenon in which the static pressure of a liquid reduces to below the liquid's vapour pressure, leading to the formation of small vapor-filled cavities in the liquid. When subjected to higher pressure, these cavities, called "bubbles" or "voids", collapse and can generate shock waves that, in this context, can disrupt proteins and cause strong mixing effects. Cavitators often work on a rotor stator principle, whereby typically a plurality of rotating crosses sharing a common axis pass between a plurality of static crosses sharing the same axis. When the crosses first move out of alignment there is significant shear applied.

The shear rate applied by a cavitator can be determined as a s⁻¹ value with desirable shear being in the region in excess of 10x10³ s⁻¹. This is already in excess of the shear observed in a hot homogenisation step as described in EP3620059. Furthermore, the shear can be described with reference to the residency time that the composition spends within the cavitator. Low residency times are desirable for efficient processing, particularly in a continuous process.

Preferably the cavitation treatment is performed with a shear of at least 10,000s⁻¹, preferably from 15,000s⁻¹ to 50,000s⁻¹, preferably from 15,000s⁻¹ to 25,000s⁻¹ and/or with a residency time of less than 10 seconds, preferably less than 3 seconds (preferably at least 1 second).

The extent of cavitation treatment can also be described by looking at the difference between the inlet and outlet temperatures. This acts as a proxy for the shear and residency times, since the temperature increase reflects the amount of energy put into the homogenised composition. Preferably the cavitation treatment is performed to achieve a temperature increase from the inlet of the cavitator to the outlet of the cavitator of at least 30ºC, preferably 30 to 60ºC, more preferably 40 to 50ºC.

These levels of cavitation treatment have been found to provide a desirable end texture for the cream-cheese-like spread product. At the same time, it has been found that the energy cost of this treatment and the cold homogenisation step may not exceed that of an alternative hot high pressure homogenisation process. This may also be because the hot composition is less viscous when produced, so there is a lower energy cost in pumping and filing. This is reflected in the "hot" yield stress values, measured at the prevailing process temperature before filling, in the examples.

The cavitation treatment is performed to achieve an exit temperature of at least 80ºC, preferably between 80ºC and 95ºC, more preferably 85 to 95ºC. The inlet temperature is preferably the temperature achieved in the cold homogenisation step and desirably will not exceed 50ºC. Preferably the inlet temperature of the cavitator is from 35 to 50ºC, more preferably 40 to 48ºC. Preferably the temperature drop between the outlet of the homogeniser and the inlet of the cavitator is minimised, such that it is less than 10ºC, more preferably less than 5ºC and most preferably less than 2ºC and, where possible substantially no temperature drop.

The treatment conditions are, therefore: cold homogenisation at an inlet temperature of up to 60ºC, preferably from 24 to 60ºC, more preferably 30 to 50 ºC, and most preferably about 38ºC, at a pressure of 20 to 600 Bar, preferably at least 200 Bar, such as 250 to 500 Bar. This is then followed by cavitation treatment in a cavitator performed to achieve an exit temperature of at least 80ºC, preferably between 80ºC and 95ºC, more preferably 85 to 90ºC. This is preferably achieved with a shear of at least 10,000s⁻¹, preferably from 15,000s⁻¹ to 50,000s⁻¹, preferably from 15,000s⁻¹ to 25,000s⁻¹.

In particular, preferably the treatment conditions are cold homogenisation with an inlet temperature of 24 to 60ºC, more, at a pressure of 20 to 600 Bar. This is then followed by cavitation treatment in a cavitator performed to achieve an exit temperature of at least 80ºC. This is achieved with a shear of at least 10,000s⁻¹.

More preferably, cold homogenisation with at an inlet temperature of 30 to 50 ºC at a pressure of 200 to 600 Bar. This is then followed by cavitation treatment in a cavitator performed to achieve an exit temperature of 80ºC and 95ºC. This is achieved with a shear of 15,000s⁻¹ to 50,000s⁻¹.

Even more preferably, cold homogenisation at an inlet temperature of about 38ºC, at a pressure of 250 to 500 Bar. This is then followed by cavitation treatment in a cavitator performed to achieve an exit temperature of 85 to 95ºC. This is achieved with a shear of 15,000s⁻¹ to 25,000s⁻¹.

Preferably the homogeniser is a conventional dairy-style homogeniser operating on the basis of a pressure drop forming a spray of the liquid to be treated. This can strike an impact surface. Such equipment is well known and discussed in EP3620059. Homogenisers are considered in the art to be different from cavitators. Preferably the cavitator works on the rotor stator principle.

After the cavitation treatment the cavitated composition is still hot and can be hot filled into the final packaging. This is desirable since the composition is still flowable and the final firm texture can develop in pack after cooling. Preferably the vegan cream-cheese-like spread is hot-filled into packaging containers at a temperature of at least 60ºC, such as 62 to 70ºC.

The firmness of the final product can be assessed using the cold firmness measurement as discussed in the examples. The firmness is desirably at least 70g when measured 30 days after production, more preferably at least 80g, more preferably 80 to 105g, since this is comparable with true dairy-based cream cheese products. If it is less than 70g then the product is too soft to be desirable.

As will be appreciated, the method comprises a plurality of different steps. These may be conducted sequentially or with the steps overlapping, where appropriate. The method as a whole may be conducted on a batchwise or continuous basis. It is preferred that the cavitation step immediately follows the cold homogenisation step.

There is described but not presently claimed, a vegan cream-cheese-like spread comprising a homogeneous distribution of plant proteins and fat, wherein:
the vegan cream-cheese-like spread having a free-fat structure which is substantially devoid of agglomerated fat-protein clusters, and having a bimodal distribution of fat droplet diameters comprising a first mode of 1 to 5µm and a second mode of 15 to 45µm, as determined by confocal laser scanning microscopy. The distribution can be readily observed and assessed from the images and it is apparent that there are few free fat droplets in between these modes. It is further noted that the fat droplets are preferably free from crystallisation.

Preferably the vegan cream-cheese-like spread comprises almond protein. Preferably the vegan cream-cheese-like spread comprises almond protein and oat protein, since this has been found to give an optimum flavour profile. Preferably the vegan cream-cheese-like spread comprises almond protein. Preferably the vegan cream-cheese-like spread comprises from 10 to 30wt% added fat.

There is described but not presently claimed, a vegan cream-cheese-like spread obtainable by the methods described herein. As demonstrated in the Examples below, the process of the present invention gives rise to a product having a unique and discernibly different microstructure.

The invention will now be described in relation to the following non-limiting figures, in which:
Figures 1A and 1B show microstructure of a comparative cavitated product.
Figures 2A and 2B show microstructure of a product made in accordance with the method.
Figures 3A and 3B show microstructure of a product made in accordance with the method.
Figures 4A and 4B show microstructure of a hot high pressure homogenised product.

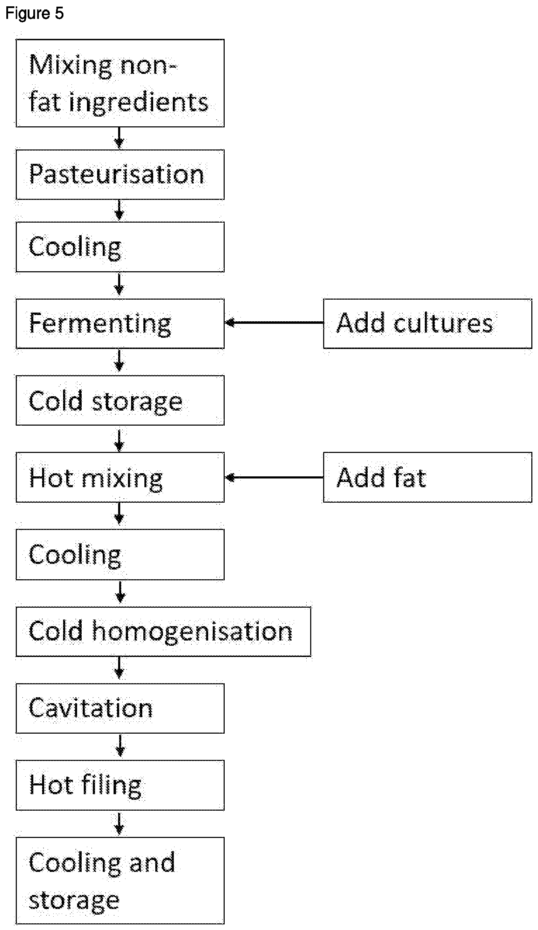

Figure 5 shows a flow-chart of the method steps.

The invention will now be described in relation to the following non-limiting Examples.

In these examples the firmness of the final product is measured with a "firmness at 10ºC" value. This measurement is an industry standard and is measured as follows. A penetrometer (Taxt2 Texture Analyzer - Stable Micro systems) equipped with a 45° cone, penetrates the cheese (which was equilibrated at a temperature of 10°C) at a speed of 2mm/s to a distance of 10mm. The force resisting the probe is displayed and the maximum load obtained at the end of the experiment is recorded. "Firmness" is the maximum load obtained during the measurement. The firmness value is recorded in [g].

For some of the examples the hot yield stress was measured. This is after cooling just before filling (yield stress at about 60°C = min. stress/force necessary for the product to start flowing) is higher when using hot high pressure homogenizer (> 40 Pa): the new product is more viscous at the filling step and easier to fill (no dripping).

Confocal Laser Scanning Microscopy was performed with portions of vegan spread cheese taken from each sample (from below the surface) and stained using 5 µL of fluorescent dyes BODIPY and fast green. The optical setup was as follows:
- BODIPY - 488 nm laser, BP 490 - 555 (PM2). Fat has been coloured green.
- Fast Green - 639 nm laser, LP640 (PM2). Protein has been coloured red.

Light Microscopy: An aliquot was thinly spread onto a slide and stained using either iodine or toluidine blue. A Zeiss Z2M light microscope was used to take images using transmitted light.

Laser diffraction: Based on the methodology of EP 3 352 580 B1, 10 g of sample was dispersed in 90 g water and stirred using a magnetic stirrer until visually dispersed, this was then added to the Mastersizer 3000 dispersion unit (Hydro MV) and stirred with repeated measurements until completely dispersed (plateau reached in PSD and obscuration values). The instrument parameters used were: Fraunhofer, 30s measurement time, 8-12% obscuration, 3000rpm stir speed, dispersant water or SDS/EDTA solution (RI1.33).

### Example 1

A vegan cream-cheese-like spread was made with the following composition:
5-10% of defatted almond powder
5-15% Oat preparation (of which 2-5wt% oat protein)
15-20% coconut oil
vegan thermophilic cultures
1-2% salt and stabiliser
the balance water

The process was the following:
A premix was created by warming up water and oat preparation in a blender/High shear mixer to 60°C. Once the water was reaching 60°C, a pre-blend of locust bean gum (LBG), salt and almond defatted powder was added to the water at 60°C. This mix was kept at 60°C under agitation and recirculation after powder addition for 10 minutes to ensure powder dissolution. The powder addition and dissolution into water could be facilitated with a high shear dispenser.

This mix was then heated to 75°C via a surface scraped heat exchanger in order to pasteurize the mix before the fermentation.

This mix is then cooled down via surface scrape heat exchangers to a temperature of 40°C +/- 2%. Vegan cultures are then added to the mix until pH =4,6 +/- 0,1 is reached. This fermented mix is then cooled down to T°C below 10°C and can be used within 48h.

The fermented mix is warm-up to 60°C in blender and fully melted coconut oil is slowly added to the fermented mix under high shear to obtain a pre-emulsion.

This emulsion is cooled down to 35°C and sent to a high pressure homogenizer at 350bar/70 bar (Flow rate 200L/h). The exit temperature after the high pressure homogenizer is 48°C. Then it is sent to the cavitator, where the product exits at a temperature of about 90°C. The mix is cooled down to 70°C and then transferred to a buffer tank (T°C about 70-75°C) and filled into tub at T°C > 63°C.

The product was found to have a desirable texture and flavour.

### Comparative Examples 1 and 2 - Cavitator only

This used the same recipe.

A premix was created by warming up water and oat preparation in a blender/High shear mixer to 60°C. Once the water was reaching 60°C, a pre-blend of LBG, salt and almond defatted powder was added to the water at 60°C. This mix was kept at 60°C under agitation and recirculation after powder addition for 10 minutes to ensure powder dissolution. The powder addition and dissolution into water could be facilitated with a high shear dispenser.

This mix was then heated to 75°C via a surface scraped heat exchanger in order to pasteurize the mix before the fermentation.

This mix is then cooled down via surface scrape heat exchangers to a temperature of 40°C +/- 2%. Vegan cultures are then added to the mix until pH =4,6 +/- 0,1 is reached. This fermented mix is then cooled down to T°C below 10°C and can be used within 48h.

The fermented mix is warm-up to 60°C in blender and fully melted coconut oil is slowly added to the fermented mix under high shear to obtain a pre-emulsion.

This emulsion is either used at 60°C (Example 1) or cooled down to 30°C (example 2) and sent to the cavitator, where the product exits at a temperature of about 90°C. The mix is cooled down to 70°C and then transferred to a buffer tank (T°C about 70-75°C) and filled into tub at T°C > 63°C.

The product was found in both instances to have an overly sloppy texture.

### Further Examples

Further experiments were conducted as summarised in the following table, using the recipe of Example 1:

| | **Sample code TRIAL** | **Sample description** | **hHaa after cavi/cooler (yield stress Pa)** | **Firmness D+14 (g)** | **Firmness D+30 (g)** |
|---|---|---|---|---|---|
| Cavi only process (comparative) | Cavi only 1 | Inlet 60°C - cavi power 95% - flow rate 200L/h - exit T° 97°C | 26.34 | 41.2 | 50.0 |
| | Cavi only 2 | Inlet 60°C - cavi power 95% - flow rate 250L/h - exit T° 94°C | 28.53 | 48.2 | 57.4 |
| | Cavi only 3 | Inlet 60°C - cavi power 100% - flow rate 250L/h - exit T° 96°C | 26.34 | 45.2 | 65.7 |
| | Cavi only 5 | Inlet 30°C - cavi power 100% - flow rate 100L/h - exit T° 98°C | 6.585 | 26.4 | 36.0 |
| Cold Homo+cavi process (inventive) | Homo+Cavi 6 | Homo 45°C 350bar/70bar-cavi power 90% - flow rate 250L/h - exit T° 95°C | 15.36 | 54.2 | 74.4 |
| | Homo+Cavi 7 | Homo 45°C 350bar/70bar-cavi power 85% - flow rate 250L/h - exit T° 93°C | 19.75 | 68.9 | 85.2 |
| | Homo+Cavi 8 | Homo 45°C 350bar/70bar-cavi power 90% - flow rate 300L/h - exit T° 94°C | 24.14 | 92.0 | 103.8 |
| | Homo+Cavi 9 | Homo 45°C 350bar/70bar - cavi power 95% - flow rate 300L/h - exit T° 90°C | 26.34 | 71.0 | 82.1 |
| Hot high pressure homo (comparative) | STD new3 (hot high pressure homo process) | STD - premix almix - homo 350bar/70bar - exit T°C 85°C | 58.2 | 60.8 | 72.8 |

The samples Homo+Cavi 6-9 are in accordance with the invention. As can be seen, these examples all have a lower yield stress after cavitator compared to hot high pressure homogenisation (after the homogeniser) which means that the composition is more readily pumpable for filing, incurring a lower energy cost of processing. In addition, the samples have a similar (or better), cold firmness to that achievable by hot high pressure homogenisation, whereas cavitation only does not achieve a suitable firmness.

It is desired that the cream-cheese-like spread product has a firmness of at least 70g after 30 days, preferably at least 80g, since this is the point at which it will have reached the supermarket shelves.

A further advantage was observed with the disclosed method compared to the STD (hot high pressure homogenised) and the cavitation-only. The filled product did not have free water on top when opened after filing (i.e. like a consumer after 30 days). On the other hand, both the STD and the cavitation-only products did. It is believed that this is as a result of the unique microstructure which retains the water.

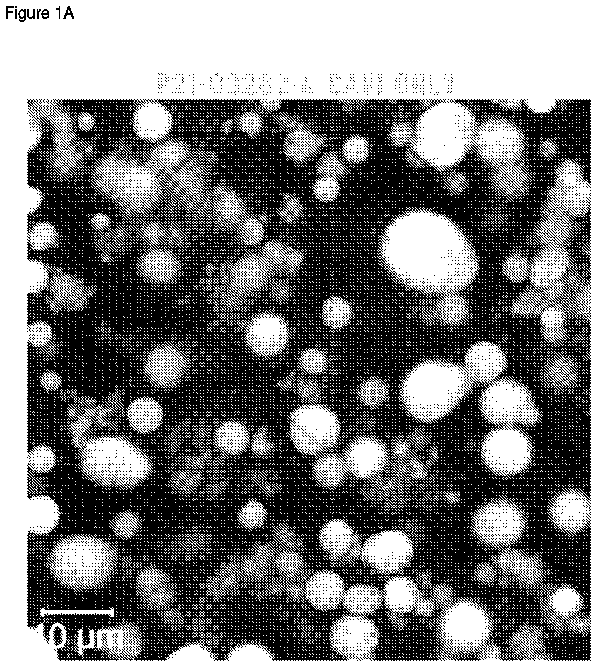

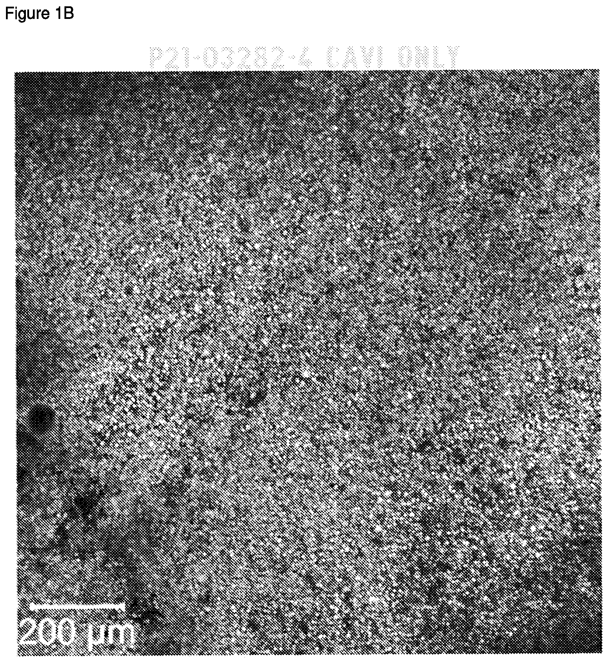

Figures 1A and 1B shows the microstructure under different magnifications achieved with cavitation only and is taken from "Cavi only 3". As can be seen, the structure has a plurality of free-fat droplets all of substantially similar sizes (1-10µm). There are some rough protein agglomerates present.

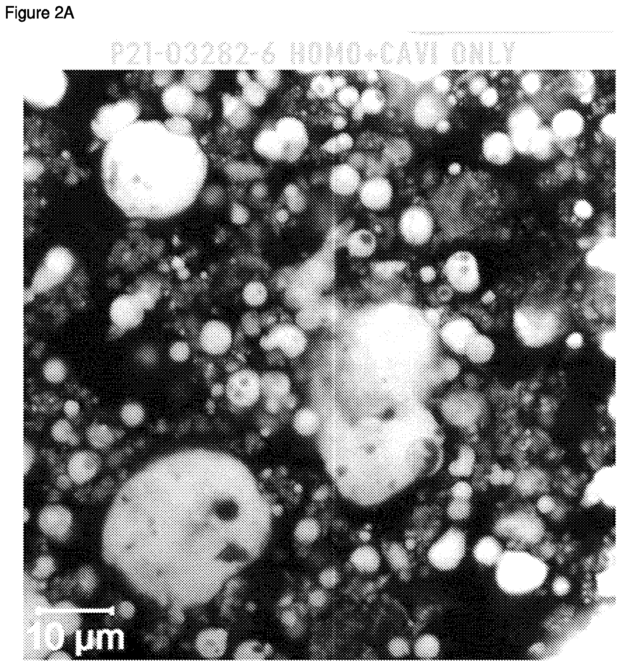

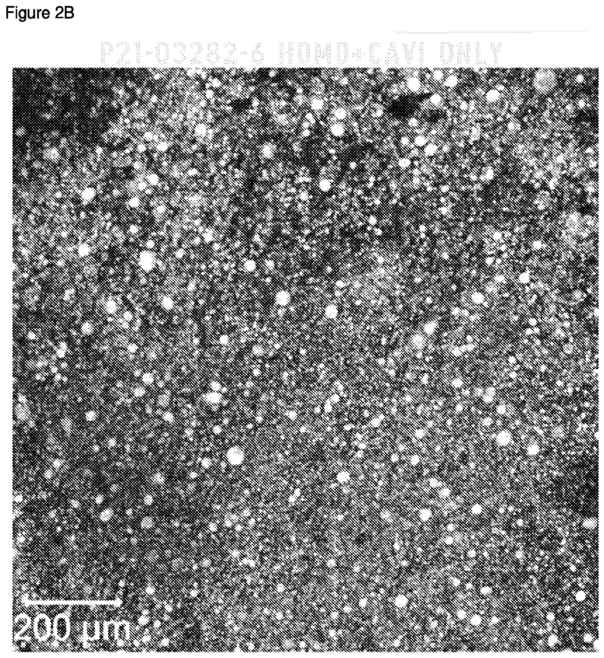

Figures 2A and 2B shows the microstructure under different magnifications achieved with homogenisation and cavitation and is taken from "Homo+Cavi 6". As can be seen, the structure has a plurality of free-fat droplets in an apparent biomodal distribution. Some of the fat droplets are in the range of 1-5µm, whereas there are also some in the region of 15-45µm. It is apparent that there are very few fat droplets sized between these two modes.

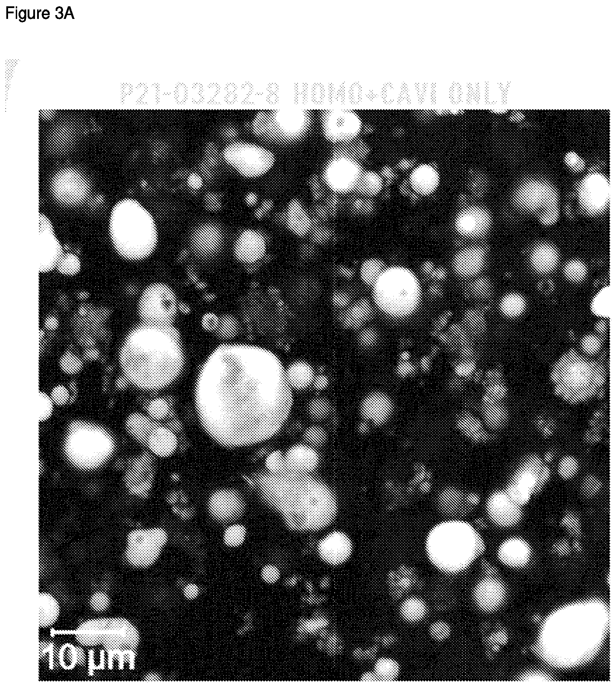

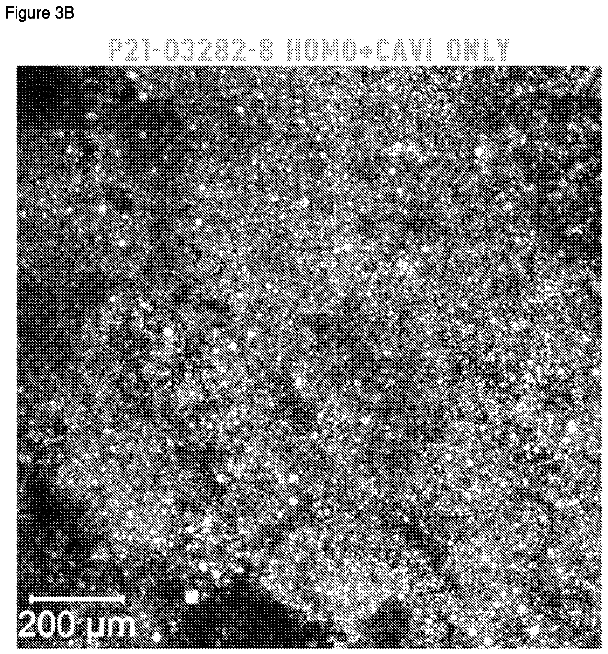

Figures 3A and 3B shows the microstructure under different magnifications achieved with homogenisation and cavitation and is taken from "Homo+Cavi 8". As can be seen, the structure has a plurality of free-fat droplets in an apparent biomodal distribution. Some of the fat droplets are in the range of 1-5µm, whereas there are also some in the region of 15-45µm, especially 15-30µm. It is apparent that there are very few fat droplets sized between these two modes.

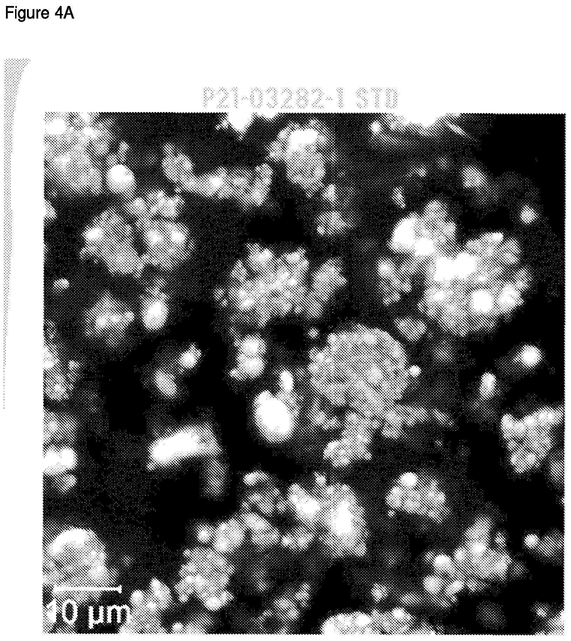

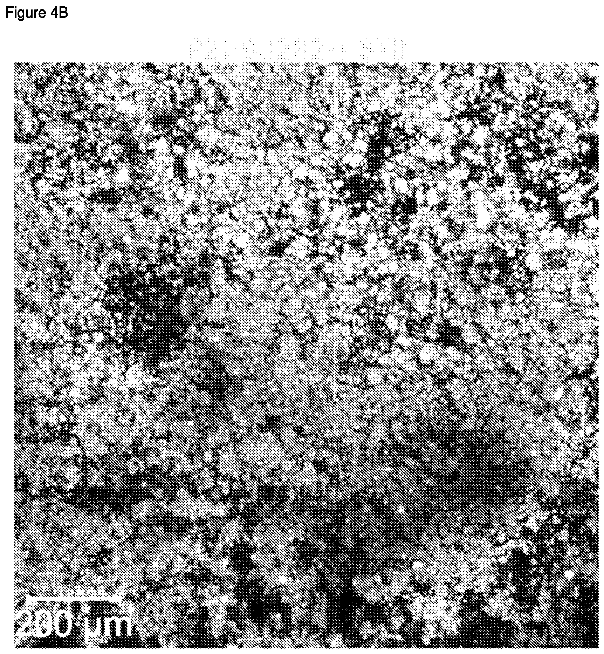

Figures 4A and 4B shows the microstructure under different magnifications achieved with hot high pressure homogenisation and is taken from "STD new3". Rather than having a broadly free-fat structure, the structure is formed of agglomerated fat-protein clusters across a range of sizes 5-70µm. Free fat that is present in the structure is very fine, generally having a size of less than 2µm.

Although it does not show clearly in the figures enclosed (further studies looked at the separate protein-only and fat-only images), it appears to the case that rather than having continuous protein aggregates with fat embedded therein (c.f. hot high pressure homogenisation), the larger fat droplets appear to have a fine coating of protein around them.

### Comparative studies

Comparative studies were undertaken to investigate whether the observed microstructure was unique compared to other products on the market. Surprisingly, this was found to be the case:

| **Vegan spread** | **Comments on structure** |
|---|---|
| Commercial coconut-based vegan cream-cheese-like spread | elongated/conjoined crystalline fat droplets, negligible protein. |
| Commercial soya-based vegan cream-cheese-like spread | partially crystalline rounded fat droplets with a continuous protein matrix. Very little unstained region visible. |
| Commercial LPI-based vegan cream-cheese-like spread | partially crystalline rounded fat droplets, discrete protein particles |
| Commercial almond-based vegan cream-cheese-like spread | partially crystalline round fat droplets, protein localised at the fat droplet surface, some large protein aggregates observed with small fat droplets embedded. |
| Commercial almond-based vegan cream-cheese-like spread | most similar microstructure to typical cream cheese - liquid fat droplets contained in fat-protein agglomerates, with some free fat droplets also present |
| Commercial coconut-based vegan cream-cheese-like spread | partially crystalline round fat droplets. Small protein particles present at the surface of the fat droplets |

The free-fat structure of the present method is substantially free from this commonly observed angular or crystalline structure.

Unless otherwise stated, all percentages herein are by weight and all pressures are absolute, rather than gauge.

Although preferred embodiments of the invention have been described herein in detail, it will be understood by those skilled in the art that variations may be made thereto without departing from the scope of the invention or of the appended claims.

## Claims

1. A method for the manufacture of a vegan cream-cheese-like spread, the method comprising:
providing an aqueous precursor composition comprising plant protein;
treating the aqueous precursor composition to form a treated composition, the treatment comprising:
(i) fermentation with vegan cultures; and/or
(ii) direct acidification with an added acidic ingredient;
subjecting the treated composition to a cold homogenisation step in a homogeniser to form a homogenised composition, wherein the cold homogenisation step is performed at a pressure of 20 to 600 Bar and at a temperature of up to 60°C;
subjecting the homogenised composition to a cavitation treatment in a cavitator to form a vegan cream-cheese-like spread, wherein the cavitation treatment is performed to achieve an exit temperature from the cavitator of at least 80 °C.

2. The method according to claim 1, wherein the aqueous precursor comprises at least 50wt% water, preferably from 70 to 90wt% water.

3. The method according to any preceding claim, wherein the aqueous precursor composition comprises a source of plant protein in an amount of at least 5wt%, preferably at least 10wt%, by weight of the aqueous precursor composition.

4. The method according to any preceding claim, wherein the source of plant protein comprises one or more of almond protein and oat protein.

5. The method according to claim 4, wherein the almond protein is provided as defatted almond powder.

6. The method according to any preceding claim, wherein the aqueous precursor composition further comprises one or more ingredient selected from gums, salt and flavourings.

7. The method according to claim 6, wherein the aqueous precursor composition is substantially free from further emulsifiers and stabilisers.

8. The method according to any preceding claim, wherein the method further comprises a step of pasteurising the aqueous precursor composition before the step of fermentation.

9. The method according to any preceding claim, wherein the method further comprises a step of adding a liquid fat to the treated composition before the step of cold homogenisation, preferably in an amount of from 10 to 30wt%, by weight of the treated composition.

10. The method according to any preceding claim, wherein the cold homogenisation step is performed at a temperature of from 24 to 60°C and most preferably about 38ºC.

11. The method according to any preceding claim, wherein the cold homogenisation step is performed at a pressure of from 200 to 500 Bar.

12. The method according to any preceding claim, wherein the cold homogenisation step is a two-stage homogenisation process.

13. The method according to any preceding claim, wherein the cavitation treatment is performed with a shear of at least 10,000s⁻¹, preferably from 15,000s⁻¹ to 25,000s⁻¹, and/or with a residency time of less than 10 seconds, preferably less than 3 seconds.

14. The method according to any preceding claim, wherein the cavitation treatment is performed to achieve a temperature increase from the inlet to the outlet of at least 30ºC.

15. The method according to any preceding claim, wherein the vegan cream-cheese-like spread is hot-filled into packaging containers at a temperature of at least 60°C.

## Patentansprüche

1. Verfahren zum Herstellen eines veganen rahmkäseartigen Aufstrichs, wobei das Verfahren umfasst:
Bereitstellen einer wässrigen Vorläuferzusammensetzung, die Pflanzenprotein umfasst;
Behandeln der wässrigen Vorläuferzusammensetzung zur Bildung einer behandelten Zusammensetzung, wobei die Behandlung umfasst:
(i) Fermentation mit veganen Kulturen; und/oder
(ii) direktes Ansäuern mit einem zugesetzten sauren Inhaltsstoff;
Unterziehen der behandelten Zusammensetzung einem Kalthomogenisierungsschritt in einem Homogenisator zur Bildung einer homogenisierten Zusammensetzung, wobei der Kalthomogenisierungsschritt bei einem Druck von 20 bis 600 Bar und bei einer Temperatur von bis zu 60 °C durchgeführt wird;
Unterziehen der homogenisierten Zusammensetzung einer Kavitationsbehandlung in einem Kavitator zur Bildung eines veganen rahmkäseartigen Aufstrichs, wobei die Kavitationsbehandlung durchgeführt wird, um eine Austrittstemperatur aus dem Kavitator von mindestens 80 °C zu erreichen.

2. Verfahren nach Anspruch 1, wobei der wässrige Vorläufer zu mindestens 50 Gew.-% Wasser, vorzugsweise zu von 70 bis 90 Gew.-% Wasser, umfasst.

3. Verfahren nach einem der vorstehenden Ansprüche, wobei die wässrige Vorläuferzusammensetzung eine Quelle für Pflanzenprotein in einer Menge von mindestens 5 Gew.-%, vorzugsweise mindestens 10 Gew.-%, bezogen auf das Gewicht der wässrigen Vorläuferzusammensetzung, umfasst.

4. Verfahren nach einem der vorstehenden Ansprüche, wobei die Quelle für Pflanzenprotein eines oder mehrere von Mandelprotein und Haferprotein umfasst.

5. Verfahren nach Anspruch 4, wobei das Mandelprotein als entfettetes Mandelpulver bereitgestellt wird.

6. Verfahren nach einem der vorstehenden Ansprüche, wobei die wässrige Vorläuferzusammensetzung ferner einen oder mehrere Inhaltsstoffe umfasst, die aus Gummis, Salz und Aromastoffen ausgewählt sind.

7. Verfahren nach Anspruch 6, wobei die wässrige Vorläuferzusammensetzung im Wesentlichen frei von weiteren Emulgatoren und Stabilisatoren ist.

8. Verfahren nach einem der vorstehenden Ansprüche, wobei das Verfahren ferner einen Schritt des Pasteurisierens der wässrigen Vorläuferzusammensetzung vor dem Schritt der Fermentation umfasst.

9. Verfahren nach einem der vorstehenden Ansprüche, wobei das Verfahren ferner einen Schritt des Hinzufügens eines flüssigen Fetts zu der behandelten Zusammensetzung vor dem Schritt der Kalthomogenisierung umfasst, vorzugsweise in einer Menge von 10 bis 30 Gew.-%, bezogen auf das Gewicht der behandelten Zusammensetzung.

10. Verfahren nach einem der vorstehenden Ansprüche, wobei der Schritt der Kalthomogenisierung bei einer Temperatur von 24 bis 60 °C und am meisten bevorzugt bei etwa 38 °C durchgeführt wird.

11. Verfahren nach einem der vorstehenden Ansprüche, wobei der Kalthomogenisierungsschritt bei einem Druck von 200 bis 500 Bar durchgeführt wird.

12. Verfahren nach einem der vorstehenden Ansprüche, wobei der Kalthomogenisierungsschritt ein zweistufiger Homogenisierungsprozess ist.

13. Verfahren nach einem der vorstehenden Ansprüche, wobei die Kavitationsbehandlung bei einer Scherung von mindestens 10.000s⁻¹ durchgeführt wird, vorzugsweise von 15.000s⁻¹ bis 25.000s⁻¹, und/oder mit einer Verweilzeit von weniger als 10 Sekunden, vorzugsweise weniger als 3 Sekunden.

14. Verfahren nach einem der vorstehenden Ansprüche, wobei die Kavitationsbehandlung durchgeführt wird, um eine Temperaturerhöhung vom Einlass zum Auslass von mindestens 30 °C zu erreichen.

15. Verfahren nach einem der vorstehenden Ansprüche, wobei der vegane rahmkäseartige Aufstrich bei einer Temperatur von mindestens 60 °C in Verpackungsbehälter heißabgefüllt wird.

## Revendications

1. Procédé destiné à la fabrication d'une préparation à tartiner de type fromage à la crème végétalienne, le procédé comprenant :
la fourniture d'une composition de précurseur aqueux comprenant une protéine végétale ;
le traitement de la composition de précurseur aqueux pour former une composition traitée, le traitement comprenant :
(i) la fermentation avec des cultures végétaliennes ; et/ou
(ii) l'acidification directe avec un ingrédient acide ajouté ;
le fait de soumettre la composition traitée à une étape d'homogénéisation à froid dans un homogénéisateur pour former une composition homogénéisée, dans lequel l'étape d'homogénéisation à froid est réalisée à une pression allant de 20 à 600 bar et à une température allant jusqu'à 60 °C ;
le fait de soumettre la composition homogénéisée à un traitement de cavitation dans un appareil de cavitation pour former une préparation à tartiner de type fromage à la crème végétalienne, dans lequel le traitement de cavitation est réalisé pour atteindre une température de sortie de l'appareil de cavitation d'au moins 80 °C.

2. Procédé selon la revendication 1, dans lequel le précurseur aqueux comprend au moins 50 % en poids d'eau, de préférence 70 à 90 % en poids d'eau.

3. Procédé selon l'une quelconque revendication précédente, dans lequel la composition de précurseur aqueux comprend une source de protéine végétale en une quantité d'au moins 5 % en poids, de préférence d'au moins 10 % en poids, par rapport au poids de la composition de précurseur aqueux.

4. Procédé selon l'une quelconque revendication précédente, dans lequel la source de protéine végétale comprend une ou plusieurs protéines parmi protéine d'amande et protéine d'avoine.

5. Procédé selon la revendication 4, dans lequel la protéine d'amande est fournie sous forme de poudre d'amande dégraissée.

6. Procédé selon l'une quelconque revendication précédente, dans lequel la composition de précurseur aqueux comprend en outre un ou plusieurs ingrédients choisis parmi gommes, sel et arômes.

7. Procédé selon la revendication 6, dans lequel la composition de précurseur aqueux est sensiblement exempte d'autres émulsifiants et stabilisants.

8. Procédé selon l'une quelconque revendication précédente, dans lequel le procédé comprend en outre une étape de pasteurisation de la composition de précurseur aqueux avant l'étape de fermentation.

9. Procédé selon l'une quelconque revendication précédente, dans lequel le procédé comprend en outre une étape d'ajout d'une matière grasse liquide à la composition traitée avant l'étape d'homogénéisation à froid, de préférence en une quantité allant de 10 à 30 % en poids, par rapport au poids de la composition traitée.

10. Procédé selon l'une quelconque revendication précédente, dans lequel l'étape d'homogénéisation à froid est réalisée à une température allant de 24 à 60 °C et le plus préférablement d'environ 38 °C.

11. Procédé selon l'une quelconque revendication précédente, dans lequel l'étape d'homogénéisation à froid est réalisée à une pression allant de 200 à 500 bar.

12. Procédé selon l'une quelconque revendication précédente, dans lequel l'étape d'homogénéisation à froid est un processus d'homogénéisation en deux étapes.

13. Procédé selon l'une quelconque revendication précédente, dans lequel le traitement de cavitation est réalisé avec un cisaillement d'au moins 10 000 s⁻¹, de préférence allant de 15 000 s⁻¹ à 25 000 s⁻¹, et/ou avec un temps de séjour inférieur à 10 secondes, de préférence inférieur à 3 secondes.

14. Procédé selon l'une quelconque revendication précédente, dans lequel le traitement de cavitation est réalisé pour obtenir une augmentation de température de l'entrée à la sortie d'au moins 30 °C.

15. Procédé selon l'une quelconque revendication précédente, dans lequel la préparation à tartiner de type fromage à la crème végétalienne est remplie à chaud dans des récipients d'emballage à une température d'au moins 60 °C.
